# EUROPÄISCHE PATENTSCHRIFT

(11) **EP 2 539 190 B1**
(45) Veröffentlichungstag und Bekanntmachung des Hinweises auf die Patenterteilung: **02.04.2014**
(21) Anmeldenummer: 10760239.3
(22) Anmeldetag: 20.08.2010
(51) Int. Cl.: B60T 8/171, B60R 21/0132, B60W 40/10

(54) **VERFAHREN ZUR STEUERUNG EINES INSASSENSCHUTZSYSTEMS UNTER BERÜCKSICHTIGUNG ZUMINDEST EINES SIGNALS ZUMINDEST EINES SENSORS EINER FAHRDYNAMIKSTEUERUNG**
METHOD FOR CONTROLLING AN OCCUPANT PROTECTION SYSTEM USING INPUT FROM A SENSOR OF A STABILITY CONTROL SYSTEM
PROCÉDÉ DE COMMANDE D'UN SYSTÈME DE PROTECTION DE PASSAGER UTILISANT LE SIGNAL D'UN CAPTEUR D'UN SYSTÈME DE STABILISATION

(30) Priorität: 25.02.2010 DE 102010009217
(43) Veröffentlichungstag der Anmeldung: 02.01.2013
(73) Patentinhaber: Continental Automotive GmbH, 30165 Hannover (DE)
(72) Erfinder: DUSCHER, Petra, 93152 Nittendorf (DE); PAGGEL, Jens, 93326 Abensberg (DE); Haupt, Björg, 93047 Regensburg (DE)
(74) Vertreter: Büchner, Jörg
(86) Internationale Anmeldenummer: PCT/DE2010/000978
(87) Internationale Veröffentlichungsnummer: WO 2011/103845

(56) Entgegenhaltungen:
- EP-A2- 1 710 133
- WO-A1-2006/122742
- DE-A1- 10 049 905
- DE-A1-102007 057 137
- US-B2- 6 701 788

## Beschreibung

Die Erfindung betrifft ein Verfahren zur Steuerung eines Insassenschutzsystems unter Berücksichtigung zumindest eines Signals von zumindest einem Sensor des Insassenschutzsystems sowie zumindest eines Signals zumindest eines Sensors einer Fahrdynamiksteuerung.

So beschreibt beispielsweise die WO 2006/122742 die Ansteuerung eines Insassenschutzmittels unter Berücksichtigung von Fahrzustandsdaten, die auch für das Fahrdynamikregelsystem verwendet werden. Auch aus der DE 10 2004 038 000 A1 ist ein Verfahren zur Steuerung eines Insassenschutzsystems, insbesondere ein Verfahren zum Bestimmen eines Neigungswinkels für die Erkennung eines Überrollvorgangs, zu entnehmen, bei dem ebenfalls Signale von Sensoren für die Fahrdynamiksteuerung (ESP) verwendet werden, um zu überprüfen, ob die Signale der Sensoren des Insassenschutzsystems plausibel sind und daher für die Steuerung des Insassenschutzsystems verwendet werden können. Die Sensoren für die Fahrdynamiksteuerung sind dabei jedoch für andere Signaleigenschaften ausgelegt und deren sensorinteme Signalaufbereitung entsprechend optimiert als bei Sensoren für das Insassenschutzsystem. So erfolgt beispielsweise für die Fahrdynamiksteuerung eine Beschränkung der Amplitude der lateralen Beschleunigungen in Fahrtrichtung und in Querrichtung auf einige wenige g (g = Wert der Erdbeschleunigung 9,81 m/s²), bspw. 2-5g, während für das Insassenschutzsystem noch deutlich höhere Beschleunigungsamplituden, bspw. bis zu 35 oder 50 g berücksichtigt werden. Die Signale sind somit nicht ohne weiteres vergleichbar und es war daher bisher eine sehr aufwändige Signalbewertung erforderlich.

Grundsätzlich wird für die Steuerung eines Insassenschutzsystems zunehmend eine redundante Überprüfung und Plausibilisierung der Sensorsignale gefordert. Zusätzliche, beispielsweise in den Fahrzeug-Außenbereich ausgelagerte Sensoren können zwar einen Unfall zeitlich früher erkennen, weisen jedoch erhebliche Mehrkosten aufgrund der zusätzlichen Sensoren und insbesondere auch der erforderlichen Verkabelung durch das gesamte Fahrzeug auf.

So ist aus der DE 10 2007 057 137 A1 bereits ein Insassenschutzsystem bekannt, bei welchem Beschleunigungssignale eines Sensors des Insassenschutzsystems und der Fahrdynamiksteuerung zur Plausibilisierung auf Abweichungen hin bewertet werden.

Dieses Dokument offenbart ein Verfahren zur Steuerung eines Insassenschutzsystems unter Berücksichtigung eines Signals von einem Sensor des Insassenschutzsystems sowie eines Signals eines Sensors einer Fahrdynamiksteuerung, wobei beide Sensoren die Querbeschleunigung messen, wobei das Signal des Sensors der Fahrdynamiksteuerung dem Insassenschutzsystem bereitgestellt wird und nachfolgend die Abweichung der beiden Signale voneinander mit einer Toleranzschwelle verglichen wird.

Die Aufgabe der vorliegenden Erfindung ist es daher, ein Verfahren zur Steuerung eines Insassenschutzsystems unter Berücksichtigung zumindest eines Signals zumindest eines Sensors einer Fahrdynamiksteuerung anzugeben, welches zugleich eine sichere Plausibilisierung ermöglicht, andererseits aber einfach zu realisieren ist.

Diese Aufgabe wird durch die Merkmale der unabhängigen Ansprüche gelöst. Vorteilhafte Weiterbildungen der Erfindung ergeben sind aus den Unteransprüchen.

Ein wesentlicher Gedanke der Erfindung besteht darin, dass das Signal des Sensors des Insassenschutzsystems ebenfalls mit den Signalverarbeitungsschritten bearbeitet wird, welche im Sensor für die Fahrdynamiksteuerung, sei es durch Eigenschaften des Sensorelementes selbst oder sensorinterne Signalverarbeitung enthalten sind. So wird also das deutlich hochfrequenter und amplitudenstärker abgebildete Beschleunigungssignal des Insassenschutzsystems beispielsweise durch entsprechende Signalverarbeitung entsprechend gefiltert und in seiner Amplitude so beschnitten, wie dies im Sensor für Fahrdynamiksteuerung bereits sensorintem vorgesehen ist. Beide Signale sind danach aber jedoch deutlich besser vergleichbar. Insbesondere kann nachfolgend die Abweichung der beiden Signale voneinander über ein Zeitfenster integriert und diese integrierte Abweichung mit einer Toleranzschwelle verglichen werden. Durch diese Integration können kurzzeitige Abweichungen noch besser ausgeglichen und eine insgesamt längere plausible Phase erhalten werden. Eine Summation digitaler Sensorwerte oder eine Mittelwertbildung sind dabei als äquivalent und mit von der Lehre des Anspruchs umfasst zu betrachten.

Durch Versuche wurde darüber hinaus festgestellt, dass gerade bei sehr schweren Unfällen die Beschleunigungssignale in eine erste Richtung unplausible Zeitbereiche genau dann aufwiesen, wenn in die dazu senkrechte Richtung hohe Signalamplituden auftraten. Das erste Beschleunigungssignal des Insassenschutzsystems kann daher auch bei einer Überschreitung der Toleranzschwelle als plausibel bewertet werden, wenn das zweite Beschleunigungssignal oder eine daraus abgeleitete Größe eine vorgegebene Schwelle überschreitet, also beispielsweise unplausible Bereiche der beiden Querbeschleunigungssignale zueinander durch ein entsprechend starkes X-Beschleunigungssignal erklärt werden.

Die Erfindung wird nun nachfolgend anhand eines Ausführungsbeispieles unter Zuhilfenahme der Figuren näher erläutert. Im Folgenden sind funktional gleiche und/oder gleiche Elemente mit den gleichen Bezugsziffern bezeichnet.

Es zeigen
- Fig. 1:: Steuergerät für Insassenschutzsystem und Fahrdynamiksteuerung zur Durchführung des Verfahrens
- Fig. 2:: Signalverläufe bei einer gerade noch nicht auslösewürdigen Bordsteinüberfahrt
- Fig. 3:: Signalverläufe bei einem seitlichen Fahrzeug-Fahrzeug-Zusammenstoß
- Fig. 4: Signalverläufe bei einem seitlichen Zusammenstoß mit einer deformierbaren Barriere
- Fig. 5: Signalverläufe bei einem seitlichen Pfahlaufprall auf die hintere Sitzreihe
- Fig. 6: Signalverläufe bei einem nur teilüberdeckenden Frontalzusammenstoß gegen ein deformierbares Hindernis (ODB - Offset deformable barrier)
- Fig. 7: Signalverläufe bei einem Frontaluzusammenstoß mit einer Wand

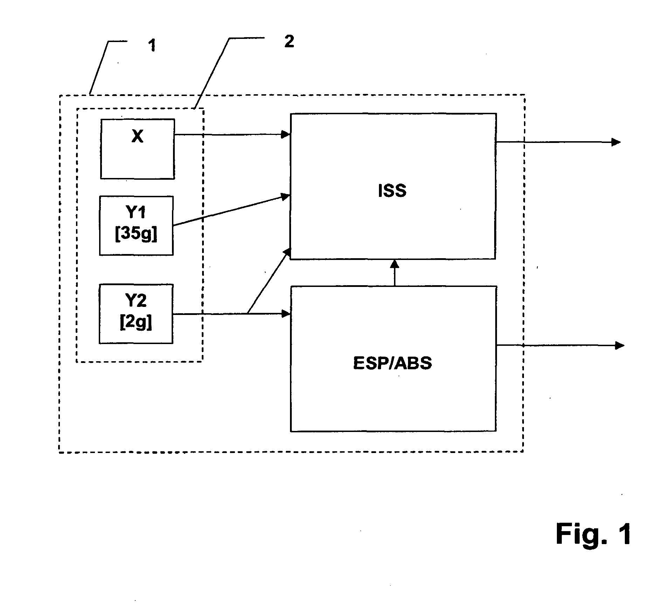

Figur 1 zeigt ein gemeinsames Steuergerät 1 für Insassenschutzsystem und Fahrdynamiksteuerung mit einem ersten Funktionsblock ISS für das Insassenschutzsystem und einen zweiten Funktionsblock ABS/ESP für die Fahrdynamiksteuerung. In diesem Ausführungsbeispiel ist ein gemeinsames Sensorcluster 2 mit Sensoren sowohl für das Insassenschutzsystem als auch die Fahrdynamiksteuerung innerhalb des gemeinsamen Steuergeräts 1 vorgesehen, wobei selbstverständlich das Sensorcluster 2 oder einzelne Sensoren dessen auch räumlich beabstandet an unterschiedlichen Positionen im Fahrzeug angeordnet sein können.

Das Sensorcluster 2 weist beispielhaft einen Beschleunigungssensor X in Fahrtrichtung und einen Beschleunigungssensor Y1 in Querrichtung für das Insassenschutzsystem mit einer Amplitudenauflösung bis 35 g auf. Selbstverständlich könnten die Beschleunigungssignale in Fahrt- und Querrichtung auch durch Koordinatentransformation aus abweichend dazu ausgerichteten Sensoren, beispielsweise 45 Grad versetzten Sensoren erzeugt und dem Algorithmus bereitgestellt werden.

Zusätzlich ist für die Fahrdynamiksteuerung noch ein zweiter Beschleunigungssensor Y2 in Querrichtung vorgesehen, welcher die üblichen Beschränkungen für fahrdynamische Sensoren aufweist, also insbesondere eine Beschränkung der Signalamplitude auf hier beispielsweise 2g sowie eine Tiefpassfilterung.

Dieses Signal vom Beschleunigungssensor Y2 wird, wie skizzenhaft in der Figur 1 angedeutet, entweder direkt vom Sensor aus auch dem Funktionsblock ISS für das Insassenschutzsystem zur Verfügung gestellt oder über den Funktionsblock ABS/ESP der Fahrdynamiksteuerung an den Funktionsblock ISS für das Insassenschutzsystem weitergeleitet.

Es ist dabei darauf zu achten, dass die Übertragungszeitdauer der Sensorsignale aller Sensoren möglichst gleichmäßig und gering ist, um Laufzeitunterschiede in Grenzen zu halten.

Während also das Signal des Sensors der Fahrzeugdynamiksteuerung in der Regel schon sensorintem durch eine Tiefpassfilterung und eine Beschränkung der Signalamplitude bearbeitet wird, wird das Signal des Sensors des Insassenschutzsystems vorzugsweise im Steuergerät des Insassenschutzsystems ebenfalls mit diesem bzw. diesen vorgegebenen Signalverarbeitungsschritt(en) nachträglich verarbeitet und somit vergleichbar zum Signal des Sensors der Fahrdynamiksteuerung gestaltet. Dabei erweist sich beispielsweise eine 2-Pol-Bessel-Filterung mit einer Grenzfrequenz von 50 Hz und eine Amplitudenbegrenzung auf 2g als gut geeignet, um einen zum Signal des Sensors der Fahrdynamiksteuerung vergleichbares Signal aus dem Signal des Sensors des Insassenschutzsystems zu gewinnen. Abweichend dazu können auch andere Filter verwendet werden. Ziel ist es, mit der Crashsensorik das Fahrdynamiksignal zu imitieren.

Nachfolgend wird die Abweichung der beiden Signale voneinander summiert bzw. integriert mit einer Toleranzschwelle verglichen und innerhalb der Toleranzschwelle die Signale als plausibel bewertet. Da kurzzeitige Abweichungen nie auszuschließen, für die Steuerung aber unerheblich sind, empfiehlt es sich, die Abweichungen über ein gleitendes Zeitfenster hinweg zu integrieren bzw. bei digitalen Signalwerten eben äquivalent dazu zu summieren. Ein solches gleitendes Zeitfenster wird in diesem Ausführungsbeispiel mit 4 ms verwendet, wobei Zeitfenster unter 10 ms zu bevorzugen sind, um hinreichend schnell auf die dynamischen Signale reagieren zu können. Ebenfalls äquivalent dazu ist natürlich auch eine gleitende Mittelwertbildung, was ja nichts anderes als die Division des über das Zeitfenster summierten bzw. integrierten Wertes durch die Zeit des Zeitfensters darstellt und da letzteres konstant ist, auch der Mittelwert im wesentlichen proportional zum Summen- bzw. Integralwert ist.

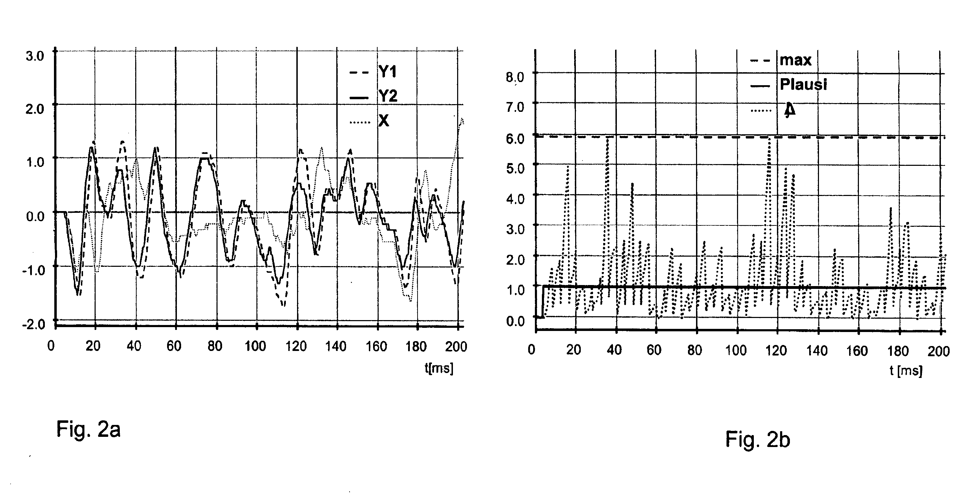

Die nachfolgenden Figuren 2 bis 7 zeigen jeweils Signalverläufe bei unterschiedlichen Zusammenstoßtypen und eine dabei vorgesehene Plausibilisierung der Querbeschleunigungssignale Y1,Y2 gegebenenfalls unter Berücksichtigung des Beschleunigungssignals X.

Während in der jeweiligen Figur a) jeweils gestrichelt als Y1 die Querbeschleunigung am Sensor des Insassenschutzsystems jedoch nach dessen Filterung und Beschneidung auf die 2g-Grenze dargestellt wird, zeigt der durchgezogene Verlauf das Querbeschleunigungssignal des Fahrdynamiksensors, welches ja schon sensorintern aufgrund des so beschränkten Signalbereichs des Sensors nur bis 2g umgewandelt wird. Die deutlich gröbere Auflösung des Sensors Y1 des Insassenschutzsystems in dem Bereich bis 2g führt dabei zusätzlich zu einer gewissen, tolerierbaren Abweichung.

Zudem ist gepunktet das Signal des Beschleunigungssensors X des Insassenschutzsystems in Fahrtrichtung angegeben, welches ja zur Bewertung an sich unplausibler Bereiche verwendet werden kann. Das Signal X ist dabei vorzugsweise ebenfalls auf 2g beschnitten.

In den jeweiligen Figuren a) ist die Beschleunigung mit einem Vorzeichen schwankend um die Null-Linie zwischen +2g und -2g gerichtet dargestellt, wobei die Zuweisung der positiven Richtung bei den Querbeschleunigungssensoren Y1 und Y2 zur rechten beziehungsweise linken Seite unerheblich ist. Das Signal X repräsentiert positive Beschleunigungen in Fahrtrichtung als positiv, das heißt im Falle eines Frontalcrashs werden entsprechend negative Beschleunigungen in X-Richtung dargestellt.

In der jeweiligen Figur b) wird gepunktet der Verlauf des integrierten Abweichungssignals dargestellt. Das heißt, es werden über ein gleitendes Zeitfenster von beispielsweise 4 ms die Abweichungen vom Beschleunigungssignal Y1 zum Beschleunigungssignal Y2 summiert und mit der gestrichelt dargestellten Maximalschwelle verglichen. Wird diese Maximalschwelle überschritten, sind die Beschleunigungssignale Y1 und Y2 zueinander nicht mehr plausibel. Die Plausibilitätsbewertung wird dabei als durchgezogene Linie dargestellt, wobei der Wert 0 einen unplausiblen Bereich charakterisiert und der Wert 1 die Plausibilität anzeigt.

Es muss gewährleistet sein, dass die Sensorik im Misusefall nicht als inplausibel klassifiziert wird. Figur 2 zeigt dabei exemplarisch die Signalverläufe eines typischerweise schwerwiegenden Misuses (60km/h, Bordsteinüberfahrt). Dieser zeigt Abweichungen der der Signale Y1 und Y2 und wurde daher für die Parametrierung des Plausibilitätskriteriums herangezogen. Während ein Aufprall bei dieser Geschwindigkeit und unter diesem Winkel auf ein größeres Hindernis eindeutig zu einer Auslösung führt, kommt es bei einer Bordsteinüberfahrt zwar auch zu signifikanten Beschleunigungssignalen in Fahrtrichtung und Querrichtung, es soll jedoch noch keine Auslösung der Insassenschutzeinrichtung erfolgen.

Die Querbeschleunigungssignale Y1 und Y2 weisen einen sehr analogen Verlauf auf, so dass der Verlauf des Zeitfensterintegrals ∫Δ über die Differenz dieser beiden Signale (in Figur 2b gepunktet dargestellt) die Maximalschwelle (Max) nicht überschreitet und somit das Plausibilitätssignal (Plausi - durchgezogene Linie) immer den der erfüllten Sensorplausibilität zugeordneten Wert 1 beibehält. Die Plausibilität ist somit für die gesamte Dauer dieses Misuses erfüllt (siehe Fig. 2b).

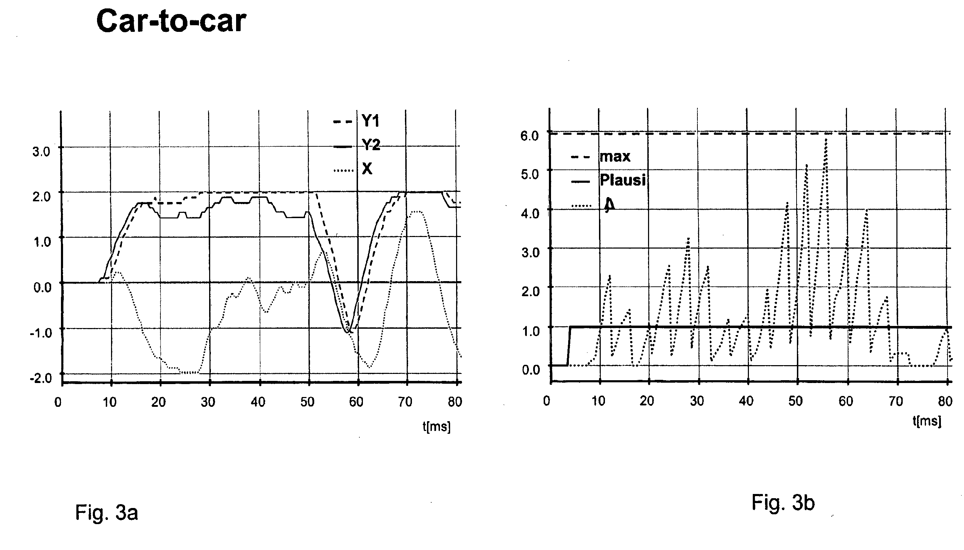

Figur 3 zeigt nun im Vergleich dazu die Signalverläufe bei einem seitlichen Fahrzeug-Fahrzeug-Zusammenstoß, bei dem also ein zweites Fahrzeug die Seite des Fahrzeugs mit dem Insassenschutzsystem rammt. Deutlich erkennbar sind die relativ starken, synchronen Ausschläge der beiden Beschleunigungssignale, wobei die Abweichungen über das Zeitfenster integriert innerhalb der Maximalschwelle bleiben. Die Querbeschleunigungssignale sind somit über den gesamten Crashverlauf zueinander plausibel und erlauben die Auslösung der Insassenschutzeinrichtungen, insbesondere der Seitenairbags.

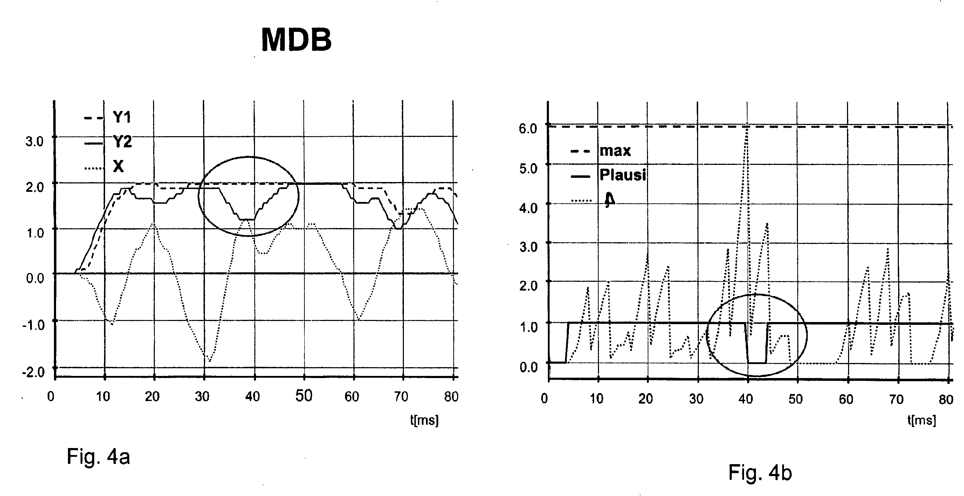

Figur 4 zeigt analog zu Figur 3 einen klassischen Seitenaufprall, Auslösefall: Zusammenstoß mit einer deformierbaren Barriere. Wie in Figur 4a eingekreist markiert, tritt in einem Zeitbereich von circa 35-45 ms ab Crashbeginn eine deutliche Abweichung des Querbeschleunigungssignals Y2 der Fahrdynamiksteuerung auf. Da jedoch zu einem deutlich früheren Zeitpunkt durch das System die Auslöseentscheidung getroffen werden konnte, hat die Plausibilität in diesem Zeitbereich keine Konsequenzen für das Auslöseverhalten.

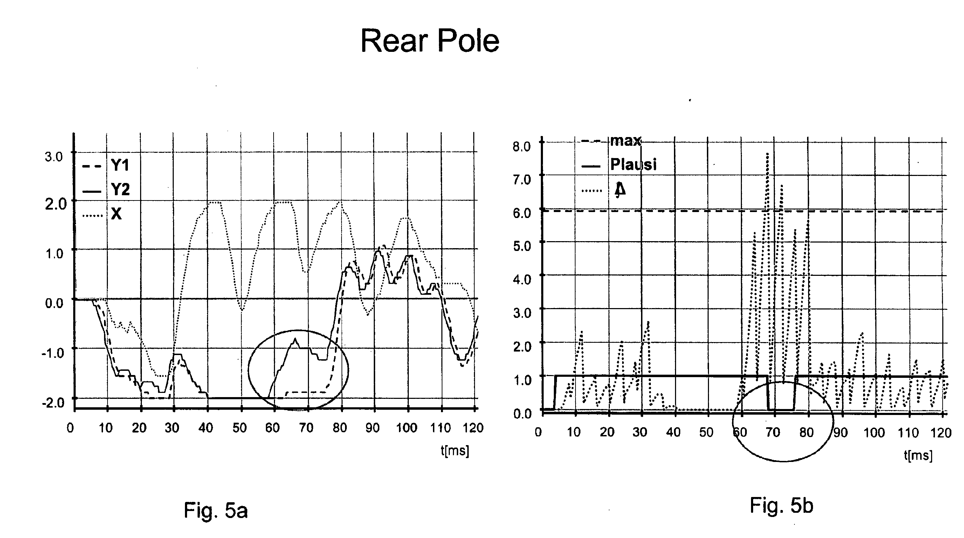

Fig. 5 zeigt nun noch die Signalverläufe bei einem seitlichen Pfahlaufprall auf die hintere Sitzreihe. Hervorzuheben ist hierbei wiederum, dass der Verlauf der Querbeschleunigungssignale Y1 und Y2 zumindest in dem für die Auslösung entscheidenden Zeitbereich plausibel und der unplausible Zeitbereich zudem durch ein starkes X-Signal gekennzeichnet ist.

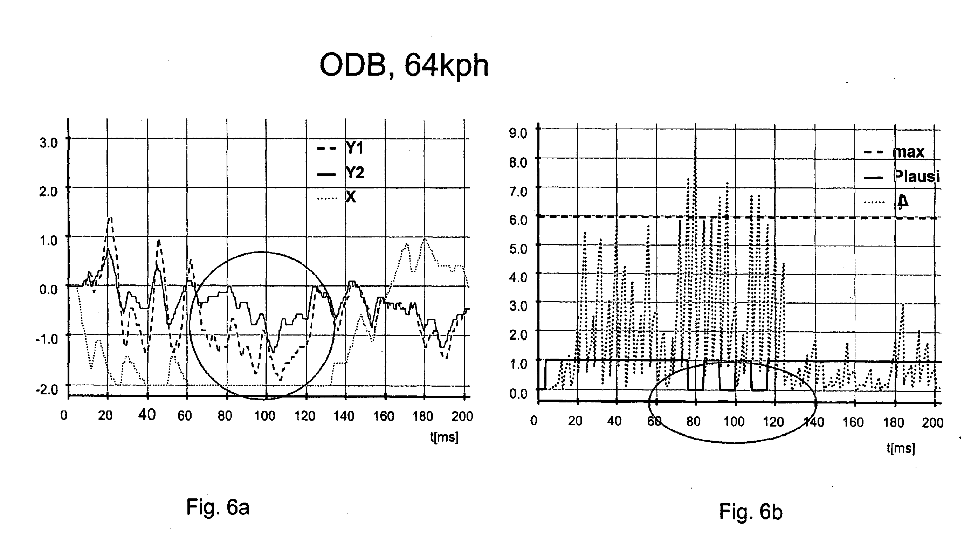

Fig. 6 zeigt noch die Signalverläufe bei einem nur teilüberdeckenden Frontalzusammenstoß mit einem deformierbaren Hindernis (ODB - Offset deformable barrier). Durch die Teilüberdeckung kommt es trotz des Zusammenstoßes in Fahrtrichtung zu signifikanten Signalanteilen in den Querbeschleunigungssignalen Y1 und Y2. Zwar weichen auch hier die Querbeschleunigungssignale in dem gekennzeichneten Bereich so weit voneinander ab, dass die Plausibilität nicht gegeben ist, jedoch ist dieser Zeitbereich deutlich nach dem für die Auslösung entscheidenden Zeitbereich (bis ca. 30ms). Zudem kann das starke Signal X in Fahrtrichtung zur Plausibilisierung herangezogen werden.

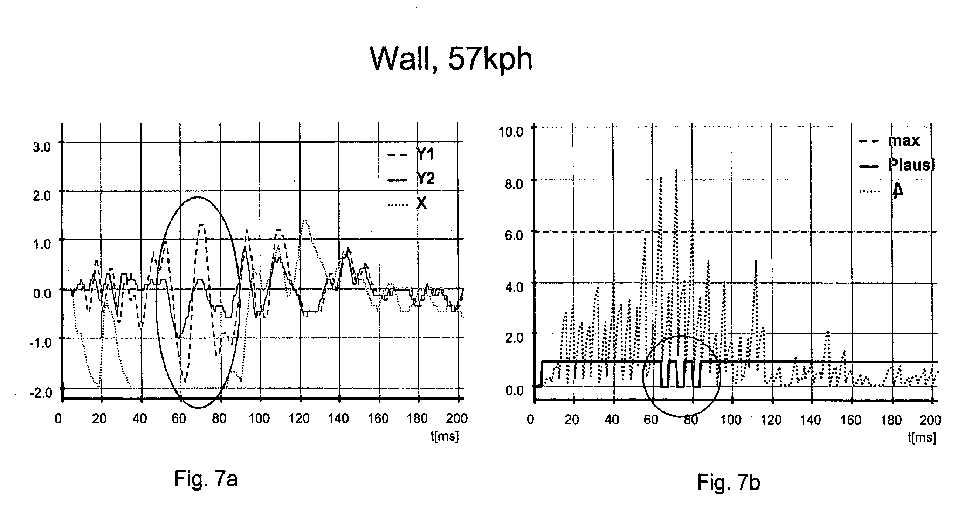

Fig. 7 zeigt noch die Signalverläufe bei einem frontalen Wand-Zusammenstoß. Auch hier kommt es aufgrund der Härte des Zusammenstoßes zu signifikanten Signalanteilen der Querbeschleunigungssignale, die jedoch wiederum im auslöseentscheidenden Zeitbereich zueinander plausibel sind. Die späteren unplausiblen Bereiche liegen deutlich nach dem Auslösezeitpunkt und könnten zudem durch ein starkes X-Signal plausibilisiert werden.

Dieses Verfahren eignet sich somit für ein Fahrzeug mit einem Steuergerät für ein Insassenschutzsystem und einem davon räumlich getrennten Steuergerät für die Fahrdynamikregelung als auch genauso für ein gemeinsames Steuergerät für Insassenschutzsystem und Fahrdynamiksteuerung. Insbesondere kann das Verfahren verwendet werden, um das Querbeschleunigungssignal des Insassenschutzsystems zu plausibilisieren, ohne dass dazu ausgelagerte Seitensensoren erforderlich sind. Dadurch reduzieren sich die Kosten des Insassenschutzsystems erheblich, ohne dass auf die gewünschte Plausibilisierung verzichtet werden müsste.

Das Verfahren ist aber sowohl für Sensoren für das Insassenschutzsystem und dazu an unterschiedlichen Positionen im Fahrzeug beabstandet angeordnete Sensoren für die Fahrdynamiksteuerung anwendbar als auch auf ein System mit Crash- und Fahrdynamiksensorik an einem gemeinsamen Ort im Fahrzeug. Beispielsweise ist die Anordnung der Sensorik in einem gemeinsamen Steuergerät für Fahrdynamik- und Crashsensorik (Sensorcluster) möglich..

## Patentansprüche

1. Verfahren zur Steuerung eines Insassenschutzsystems unter Berücksichtigung
zumindest eines Signals von zumindest einem Sensor des Insassenschutzsystems sowie
zumindest eines Signals zumindest eines Sensors einer Fahrdynamiksteuerung,
wobei beide Sensoren die Querbeschleunigung messen und das Signal des Sensors der Fahrdynamiksteuerung nach einem vorgegebenen Signalverarbeitungsschritt dem Insassenschutzsystem bereitgestellt wird, wobei
das Signal des Sensors des Insassenschutzsystems ebenfalls mit diesem vorgegebenen Signalverarbeitungsschritt verarbeitet und
nachfolgend die Abweichung der beiden Signale voneinander über ein Zeitfenster integriert bzw. summiert und diese integrierte bzw. summierte Abweichung mit einer Toleranzschwelle verglichen und innerhalb der Toleranzschwelle die Signale als plausibel bewertet werden.

2. Verfahren nach Anspruch 1, **dadurch gekennzeichnet, dass** der vorgegebene Signalverarbeitungsschritt eine Tiefpassfilterung, insbesondere eine 2-Pol-Bessel-Filterung, aufweist.

3. Verfahren nach einem der vorangehenden Ansprüche, **dadurch gekennzeichnet, dass** der vorgegebene Signalverarbeitungsschritt eine Amplitudenbegrenzung aufweist.

4. Verfahren nach Anspruch 1 oder 2, **dadurch gekennzeichnet, dass** vom Insassenschutzsystem ein erstes Beschleunigungssignal in eine erste Richtung erzeugt und mit einem Beschleunigungssignal von der Fahrdynamiksteuerung ebenfalls in diese erste Richtung verglichen wird, wobei das Insassenschutzsystem zusätzlich ein zweites Beschleunigungssignal in eine zweite, zur ersten senkrechte Richtung bereit stellt und das erste Beschleunigungssignal des Insassenschutzsystems auch bei einer Überschreitung der Toleranzschwelle als plausibel bewertet, wenn das zweite Beschleunigungssignal oder eine daraus abgeleitete Größe eine vorgegebene Schwelle überschreitet.

5. Steuergerät für ein Insassenschutzsystem mit zumindest einem Sensor für das Insassenschutzsystem und einem Signaleingang für den Empfang eines Sensorsignals eines Sensors der Fahrdynamiksteuerung, wobei beide Sensoren die Querbeschleunigung messen, und sowie Mitteln zur Durchführung des Verfahrens nach einem der vorangehenden Ansprüche, und zwar
Mitteln, um das Signal des Sensors der Fahrdynamiksteuerung nach einem vorgegebenen Signalverarbeitungsschritt dem Insassenschutzsystem bereitzustellen, Mitteln, um das Signal des Sensors des Insassenschutzsystems ebenfalls mit diesem vorgegebenen Signalverarbeitungsschritt zu verarbeiten und
Mitteln, um nachfolgend die Abweichung der beiden Signale voneinander über ein Zeitfenster zu integrieren bzw. summieren und diese integrierte bzw. summierte Abweichung mit einer Toleranzschwelle zu vergleichen und innerhalb der Toleranzschwelle die Signale als plausibel zu bewerten.

6. Gemeinsames Steuergerät für ein Insassenschutzsystem und einer Fahrdynamiksteuerung mit zumindest einem Sensor für das Insassenschutzsystem und zumindest einem Sensor für die Fahrdynamiksteuerung, wobei beide Sensoren die Querbeschleunigung messen, und sowie Mitteln zur Durchführung des Verfahrens nach einem der Ansprüche 1-4, und zwar
Mitteln, um das Signal des Sensors der Fahrdynamiksteuerung nach einem vorgegebenen Signalverarbeitungsschritt dem Insassenschutzsystem bereitzustellen, Mitteln, um das Signal des Sensors des Insassenschutzsystems ebenfalls mit diesem vorgegebenen Signalverarbeitungsschritt zu verarbeiten und
Mitteln, um nachfolgend die Abweichung der beiden Signale voneinander über ein Zeitfenster zu integrieren bzw. summieren und diese integrierte bzw. summierte Abweichung mit einer Toleranzschwelle zu vergleichen und innerhalb der Toleranzschwelle die Signale als plausibel zu bewerten.

## Claims

1. A method for controlling an occupant protection system taking into account
at least one signal of at least one sensor of said occupant protection system and
at least one signal of at least one sensor of a stability control system,
wherein both sensors measure lateral acceleration, and the signal of the sensor of the stability control system is provided to the occupant protection system after a predefined signal processing step, wherein
said predefined signal processing step is also applied to the signal of the sensor of the occupant protection system, and
subsequently, the difference between the two signals is integrated or summed up over a period of time, and said integrated or summed difference is compared with a tolerance threshold, and the signals are classified as plausible within the tolerance threshold.

2. The method according to claim 1, **characterized in that** the predefined signal processing step includes low-pass filtering, in particular by means of a second-order Bessel filter.

3. The method according to any one of the preceding claims, **characterized in that** the predefined signal processing step includes a limitation of the amplitude.

4. The method according to claim 1 or 2, **characterized in that**
the occupant protection system generates a first acceleration signal in a first direction and compares it with an acceleration signal which is provided by the stability control system and is orientated in said first direction as well, wherein the occupant protection system additionally provides a second acceleration signal in a second direction at right angles to the first direction and classifies the first acceleration signal of the occupant protection system as plausible, even if the tolerance threshold is exceeded, if the second acceleration signal or a parameter derived therefrom exceeds a predefined threshold.

5. A control apparatus for an occupant protection system, including at least one sensor for said occupant protection system and a signal input for receiving a sensor signal of a sensor of the stability control system, both sensors measuring lateral acceleration, as well as means for implementing the method according to any one of the preceding claims, specifically
means for providing the signal of the sensor of the stability control system to the occupant protection system after a predefined signal processing step,
means for applying said predefined signal processing step to the signal of the sensor of the occupant protection system as well, and
means for the subsequent integration or summing up of the difference between the two signals over a period of time, and for comparing said integrated or summed difference with a tolerance threshold, and classifying the signals as plausible within the tolerance threshold.

6. A shared control apparatus for an occupant protection system and a stability control system, including at least one sensor for said occupant protection system and at least one sensor for said stability control system, both sensors measuring lateral acceleration, as well as means for implementing the method according to any one of claims 1-4, specifically
means for providing the signal of the sensor of the stability control system to the occupant protection system after a predefined signal processing step,
means for applying said predefined signal processing step to the signal of the sensor of the occupant protection system as well, and
means for the subsequent integration or summing up of the difference between the two signals over a period of time, and for comparing said integrated or summed difference with a tolerance threshold, and classifying the signals as plausible within the tolerance threshold.

## Revendications

1. Procédé de commande d'un système de protection d'occupants, avec prise en compte d'au moins un signal d'au moins un capteur du système de protection d'occupants
ainsi que
d'au moins un signal d'au moins un capteur d'une commande de dynamique de conduite,
les deux capteurs mesurant l'accélération transversale, et le signal du capteur de la commande de dynamique de conduite étant fourni au système de protection d'occupants après une étape prédéfinie de traitement du signal,
le signal du capteur du système de protection d'occupants étant également traité avec cette étape prédéfinie de traitement du signal, et
l'écart des deux signaux l'un par rapport à l'autre étant ensuite intégré ou respectivement cumulé à l'intérieur d'une fenêtre de temps et cet écart intégré ou respectivement cumulé étant comparé à un seuil de tolérance, et les signaux à l'intérieur du seuil de tolérance étant évalués comme plausibles.

2. Procédé selon la revendication 1, **caractérisé en ce que** l'étape prédéfinie de traitement du signal présente un filtrage passe-bas, en particulier un filtrage de Bessel à 2 pôles.

3. Procédé selon une des revendications précédentes, **caractérisé en ce que** l'étape prédéfinie de traitement du signal présente une limitation d'amplitude.

4. Procédé selon la revendication 1 ou 2, **caractérisé en ce que**
le système de protection d'occupants produit un premier signal d'accélération dans une première direction, et ce signal est comparé avec un signal d'accélération de la commande de dynamique de conduite également dans cette première direction, le système de protection d'occupants fournissant en plus un deuxième signal d'accélération dans une deuxième direction perpendiculaire à la première, et le premier signal d'accélération du système de protection d'occupants étant évalué comme plausible même en cas de dépassement du seuil de tolérance si le deuxième signal d'accélération ou une grandeur qui en est dérivée passe au-dessus d'un seul prédéfini.

5. Appareil de commande pour un système de protection d'occupants avec au moins un capteur pour le système de protection d'occupants et avec une entrée de signal pour la réception d'un signal de capteur d'un capteur de la commande de dynamique de conduite, les deux capteurs mesurant l'accélération transversale, ainsi qu'avec des moyens pour la réalisation du procédé selon une des revendications précédentes, et cela avec
des moyens pour fournir au système de protection d'occupants le signal du capteur de la commande de dynamique de conduite après une étape prédéfinie de traitement du signal,
des moyens pour traiter le signal du capteur du système de protection d'occupants également avec cette étape prédéfinie de traitement du signal et
des moyens pour intégrer ou respectivement cumuler ensuite l'écart des deux signaux l'un par rapport à l'autre à l'intérieur d'une fenêtre de temps, et pour comparer cet écart intégré ou respectivement cumulé avec un seuil de tolérance et pour évaluer comme plausibles les signaux à l'intérieur du seuil de tolérance.

6. Appareil de commande commun pour un système de protection d'occupants et une commande de dynamique de conduite avec au moins un capteur pour le système de protection d'occupants et au moins un capteur pour la commande de dynamique de conduite, les deux capteurs mesurant l'accélération transversale, et ainsi qu'avec des moyens pour la réalisation du procédé selon une des revendications 1-4, et cela avec
des moyens pour fournir au système de protection d'occupants le signal du capteur de la commande de dynamique de conduite après une étape prédéfinie de traitement du signal,
des moyens pour traiter le signal du capteur du système de protection d'occupants également avec cette étape prédéfinie de traitement du signal, et
des moyens pour intégrer ou respectivement cumuler ensuite l'écart des deux signaux l'un par rapport à l'autre à l'intérieur d'une fenêtre de temps, et pour comparer cet écart intégré ou respectivement cumulé avec un seuil de tolérance et pour évaluer comme plausibles les signaux à l'intérieur du seuil de tolérance.
